# EUROPEAN PATENT APPLICATION

(11) **EP 4 181 457 A1**
(43) Date of publication of application: **17.05.2023**
(21) Application number: 21207699.6
(22) Date of filing: 11.11.2021
(51) Int. Cl.: H04L 9/08

(54) **QUANTUM BASED METHOD AND SYSTEM FOR PERFORMING CRYPTOCURRENCY ASSET TRANSACTIONS**

(71) Applicant: Terra Quantum AG, 9400 Rorschach (CH)
(72) Inventor: KIRSANOV, Nikita, 9400 Rorschach (CH); KOLYBELNIKOV, Alexander, 9400 Rorschach (CH)
(74) Representative: Kretschmann, Dennis

(57) **Abstract**

The disclosure relates to a method and a system for performing cryptocurrency asset transactions, the method, in the system comprising a plurality of data processing devices, comprising the following steps:
- generating, by a server, at least one first target cryptocurrency key pair and at least one corresponding first target cryptocurrency address of a first cryptocurrency and storing the at least one first target cryptocurrency key pair and the at least one first target cryptocurrency address on the server;
- transferring at least one first cryptocurrency asset from at least one initial cryptocurrency address to the at least one first target cryptocurrency address employing a first cryptocurrency protocol;
- in reaction to determining that a cryptocurrency asset has been transferred:
- providing a first password in a first user device; and
- providing, by the server, first user data assigned to a first user with a first vault asset corresponding to the at least one first cryptocurrency asset;

- transmitting the first password from the first user device to the server via a first communication channel employing a first quantum key distribution protocol, and verifying the first password by the server; and
- in reaction to the first password having been verified:
- removing, by the server, a second vault asset from the first user data;
- transmitting at least one second target cryptocurrency key pair and at least one corresponding second target cryptocurrency address of at least one second cryptocurrency asset corresponding to the second vault asset from the server to the first user device via the first communication channel employing the first quantum key distribution protocol or providing, by the server, second user data assigned to a second user with the second vault asset.

## Description

The present disclosure refers to a method for performing cryptocurrency asset transactions, in particular by employing quantum key distribution techniques.

### Background

With technological progress in quantum computing, integrity of classical asymmetric cryptography is becoming uncertain. Such a lack of integrity particularly endangers blockchain-based cryptocurrencies that utilize asymmetric algorithms in digital signing of transactions for proving their authenticity. If an adversary with sufficiently large quantum computational resources is able to forge digital signatures based on classical asymmetric cryptography, they are in principle able to spend anyone's cryptocurrency assets.

A classical asymmetric authentication protocol relies on a private-public key pair generated by means of one-way functions. Namely, the public key of a key pair can be easily derived from the private key, but the opposite task of deriving the private key from the public key is computationally complex and can generally not be done efficiently with a classical computer. The private key is only known to its holder and the public key is available to everyone else. In case a user wants to sign their message, they must apply certain mathematical transformation to their private key and the message itself in order to generate the authentication code constituting a digital signature. The mathematical relation between the private key and the public key is such that the public key can be used to verify the authentication code. Therefore, every user can validate that the message was signed by the legitimate individual and no user can forge digital signatures since the private key is only accessible to its holder.

However, an adversary equipped with a sufficiently powerful quantum computer is in principle able to restore the private key from the corresponding public key and thus forge the signatures of the holder.

In the context of cryptocurrencies - particularly Bitcoin - every invoice address is assigned with a unique private-public key pair that cannot be changed. Sending cryptocurrency assets (such as a certain amount of Bitcoins) from one cryptocurrency address to another cryptocurrency address constitutes a transaction which must be signed by the sender. A signature is generated from the hash of the Bitcoin transaction data, which includes the address of the recipient and the private key of the sender. The Bitcoin transaction data together with the signature and the public key of the sender is sent to other cryptocurrency nodes, who use the provided public key to verify the authenticity of the transaction.

In light of the threat due to attacks using quantum computers, the moment an adversary knows the public key of the sender, they can derive the corresponding private key and make subsequent unauthorized transactions by falsifying the signatures.

### Summary

It is an object of the present disclosure to provide a method and a system for performing cryptocurrency asset transactions. In particular, cryptocurrency assets shall be protected from attacks with quantum computing devices, while still being potentially accessible to different users/ clients.

For solving the problem, a method for performing cryptocurrency asset transactions according to independent claim 1 is provided. Further, a system for performing cryptocurrency asset transactions according to independent claim 15 is provided.

According to one aspect, a method for performing cryptocurrency asset transactions is provided. The method comprises, in a system comprising a plurality of data processing devices, generating, by a server, at least one first target cryptocurrency key pair and at least one corresponding first target cryptocurrency address of a first cryptocurrency and storing the at least one first target cryptocurrency key pair and the at least one first target cryptocurrency address on the server; transferring at least one first cryptocurrency asset from at least one initial cryptocurrency address to the at least one first target cryptocurrency address employing a first cryptocurrency protocol; and, in reaction to determining that a cryptocurrency asset has been transferred, providing a first password in a first user device and providing, by the server, first user data assigned to a first user with a first vault asset corresponding to the at least one first cryptocurrency asset. The method further comprises transmitting the first password from the first user device to the server via a first communication channel employing a first quantum key distribution protocol and verifying the first password by the server; and, in reaction to the first password having been verified, removing, by the server, a second vault asset from the first user data; transmitting at least one second target cryptocurrency key pair and at least one corresponding second target cryptocurrency address of at least one second cryptocurrency asset corresponding to the second vault asset from the server to the first user device via the first communication channel employing the first quantum key distribution protocol or providing, by the server, second user data assigned to a second user with the second vault asset.

According to another aspect, a system for performing cryptocurrency asset transactions is provided, the system comprising a plurality of data processing devices and configured to perform generating, by a server, at least one first target cryptocurrency key pair and at least one corresponding first target cryptocurrency address of a first cryptocurrency and storing the at least one first target cryptocurrency key pair and the at least one first target cryptocurrency address on the server; transferring at least one first cryptocurrency asset from at least one initial cryptocurrency address to the at least one first target cryptocurrency address employing a first cryptocurrency protocol; in reaction to determining that a cryptocurrency asset has been transferred, providing a first password in a first user device and providing, by the server, first user data assigned to a first user with a first vault asset corresponding to the at least one first cryptocurrency asset; transmitting the first password from the first user device to the server via a first communication channel employing a first quantum key distribution protocol and verifying the first password by the server; and, in reaction to the first password having been verified, removing, by the server, a second vault asset from the first user data; transmitting at least one second target cryptocurrency key pair and at least one corresponding second target cryptocurrency address of at least one second cryptocurrency asset corresponding to the second vault asset from the server to the first user device via the first communication channel employing the first quantum key distribution protocol or providing, by the server, second user data assigned to a second user with the second vault asset.

With the disclosed method and system, cryptocurrency asset transactions may be carried out in a quantum secure manner. In particular, cryptocurrency assets may be deposited, withdrawn, and transferred between different users via corresponding vault assets while being protected from attackers with large quantum computing resources. The disclosed method and system may offer an additional layer of protection against quantum attacks on top of known cryptocurrency protocols and thus provides a quantum blockchain superstructure (QBS) for quantum-safe deposit and transfer of cryptocurrency assets.

Even though cryptocurrency addresses are mathematically related to the corresponding public keys, they are generally different from the public keys. For example, the Bitcoin protocol uses a pay-to-public-key-hash (pay-to-pubkey-hash) system, i.e., a Bitcoin address is only a hash of the corresponding public key. Bitcoin addresses have a length of 160 bits and are obtained from the public key (having a length of 512 bits) by applying SHA-256 and RIPEMD hash functions. No algorithm allows to effectively and uniquely restore the public key from its hash (value). The public key of a newly generated Bitcoin address is not revealed to the public until any sum of Bitcoins which were sent to this Bitcoin address are to be redeemed via a further transaction. Hence, until then, the Bitcoin address is not attackable by quantum computing devices. When a user having the Bitcoin address provides the signature and the public key to redeem Bitcoins, other participants of the Bitcoin blockchain check that the hash of the provided public key is equal to the Bitcoin address and subsequently verify the signature against the public key.

The server (herein also called the vault) allows for securely storing cryptocurrency assets distributed among newly generated (target) cryptocurrency addresses. These target cryptocurrency addresses can be considered newly generated in the sense that no cryptocurrency assets have been redeemed from them and their public keys have not been publicly revealed.

All communication between user devices and the server may be carried out via a quantum-secure communication channel based on quantum key distribution (QKD). By employing QKD protocols for transmitting passwords and in particular, cryptocurrency key pairs, each two parties (in particular, user and server) may distribute a shared random secret bit sequence for establishing quantum-secure communication. QKD protocols may allow to protect further communication between the two parties with one-time pad (OTP) encryption techniques. For example, with OTP encryption, each bit of a plaintext may be encrypted via an XOR operation with the corresponding key bit. The key can be used only once. The resulting ciphertext can be decoded only with the same key. Information-theoretical security of OTP methods has been theoretically proven, cf. Claude Shannon (1949), Bell System Technical Journal. 28 (4): 656-715.

As a result, the cryptocurrency assets cannot be compromised even from an attacker with vast quantum computing resources. All the while, cryptocurrency assets can be transferred between different users via internal server transactions of vault assets on the server and quantum-secure communication between each user device and the server. Hence, known cryptocurrencies can effectively still be used as currencies even in view of quantum computers that may successfully attack present asymmetric cryptographic protocols.

Depositing funds associated with a (single) initial cryptocurrency address in the vault using fragmentation of the funds among a plurality of target cryptocurrency addresses may allow for carrying out (internal) cryptocurrency asset transactions within the vault by different amounts without having to perform cryptocurrency transactions using ordinary cryptocurrency protocols and thus reveal cryptocurrency public keys. A user, on the other hand, can withdraw any amount of cryptocurrency as long as this amount can be composed of the thus atomized funds in the vault.

Within the context of the present disclosure, transmitting data, such as a target cryptocurrency key pair or a password, includes transmitting signals or messages indicative of said data.

As understood herein, transferring a cryptocurrency asset from a cryptocurrency address to a further cryptocurrency address via a cryptocurrency protocol may be carried out employing the known necessary steps required for cryptocurrency asset transactions within the corresponding cryptocurrency protocol. In particular, a signature may be generated from the hash of cryptocurrency transaction data which includes the address of the recipient user and the private key of the sending user. The cryptocurrency transaction data together with the signature and the public key of the sending user is sent to other cryptocurrency nodes, who use the provided public key to verify the authenticity of the transaction. The cryptocurrency asset transfer according to the cryptocurrency protocol can for example be initiated by the user device. Cryptocurrency transactions refer to transactions employing a known cryptocurrency protocol, such as a bitcoin transaction from a first bitcoin address to a second bitcoin address. Further, server transactions (internal server transactions / vault transactions) refer to transactions that comprise changing user data on the server.

Within the context of the present disclosure, providing an entity on a data processing device may be generating the entity on the data processing device or modifying the (already generated) entity on the data processing device.

The method may further comprise transmitting the at least one first target cryptocurrency address from the server to the first user device. The at least one first target cryptocurrency key pair may be a plurality of first target cryptocurrency key pairs; the at least one first target cryptocurrency address maybe a plurality of first target cryptocurrency addresses, the at least one first cryptocurrency asset target maybe a plurality of first cryptocurrency asset targets. Further entities comprising at least one quantity may also be a respective plurality of the quantities. Providing the first user data with the first vault asset may comprise increasing a first balance assigned to the first user by a first value corresponding to the at least one first cryptocurrency asset.

Removing the second vault asset from the first user data may comprise decreasing the first balance by a second value corresponding to the at least one second cryptocurrency asset. Additionally or alternatively, providing the second user data with the second vault asset may comprise increasing a second balance assigned to a second user by the second value.

The first balance and/or the second balance may each represent an amount of tokens that corresponds to cryptocurrency assets according to a rate with respect to the first cryptocurrency. For example, 1.0 tokens may correspond to 0.5 Bitcoins. The rate may be time-dependent.

The method may further comprise at least one of providing a second password in a second user device; transmitting the second password from the second user device to the server via a second communication channel employing a second quantum key distribution protocol and verifying the second password by the server; and in reaction to the second password having been verified: removing, by the server, a third vault asset from the second user data, preferably comprising decreasing the second balance assigned to the second user by a third value corresponding to the at least one third cryptocurrency asset, and transmitting at least one third target cryptocurrency key pair and at least one corresponding third target cryptocurrency address of at least one third cryptocurrency asset corresponding to the third vault asset from the server to the second user device via the second communication channel employing the second quantum key distribution protocol.

The first quantum key distribution protocol and the second quantum key distribution protocol may be different or may be the same.

After transmitting the at least one third target cryptocurrency key pair from the server to the second user device, the at least one third target cryptocurrency key pair may be deleted from the server. Additionally, after transmitting the at least one second target cryptocurrency key pair from the server to the first user device, the at least one second target cryptocurrency key pair may be deleted from the server.

Providing the first password in the first user device may comprise: generating the first password by the server and transmitting the first password from the server to the first user device via the first communication channel employing the first quantum key distribution protocol or, alternatively, generating the first password by the first user device and transmitting the first password from the first user device to the server via the first communication channel employing the first quantum key distribution protocol.

Providing the second password in the second user device may comprise at least one of: generating the second password by the server and transmitting the second password from the server to the second user device via the second communication channel employing the second quantum key distribution protocol or generating the second password by the second user device and transmitting the second password from the second user device to the server via the second communication channel employing the second quantum key distribution protocol.

The first password may be stored on the server and verifying the first password may comprise comparing the first password transmitted from the first user device with the first password stored on the server. Alternatively and preferably, only a first hash of the first password may be stored on the server (in the server memory). Subsequently, a transmitted hash of the first password transmitted from the first user device may be determined and may be compared with the (stored) first hash.

The second password may be stored on the server and verifying the second password may comprise comparing the second password transmitted from the second user device with the second password stored on the server. Alternatively, only a second hash of the second password may be stored on the server. Subsequently, a second transmitted hash of the second password transmitted from the second user device may be determined and may be compared with the (stored) second hash.

The first password and/or the second password may, e.g., comprise a string of characters.

The method may further comprise: generating, by the server, at least one fourth first target cryptocurrency key pair and at least one corresponding fourth target cryptocurrency address of a second cryptocurrency and storing the at least one fourth target cryptocurrency key pair and the at least one fourth target cryptocurrency address on the server; transferring at least one fourth cryptocurrency asset from at least one second initial cryptocurrency address to the fourth target cryptocurrency address employing a second cryptocurrency protocol; and
modifying, by the server, the first user data with a fourth vault asset corresponding to the at least one fourth cryptocurrency asset.

The first cryptocurrency and the second cryptocurrency may be different.

The first cryptocurrency protocol may be a blockchain-based protocol, preferably in which each cryptocurrency address maybe a fingerprint, more preferably a hash, of a cryptocurrency public key of a cryptocurrency key pair. Additionally or alternatively, the second cryptocurrency protocol may be a blockchain-based protocol, preferably in which each cryptocurrency address may be a fingerprint of a cryptocurrency public key of a cryptocurrency key pair.

One of the first cryptocurrency protocol and the second cryptocurrency protocol, preferably each of the first cryptocurrency protocol and the second cryptocurrency protocol, may be configured such that each cryptocurrency address maybe determined from a cryptocurrency public key of a cryptocurrency key pair by applying a hash function to said cryptocurrency public key.

In particular, the first target cryptocurrency address may be a fingerprint or a hash of a first target cryptocurrency public key of the first target cryptocurrency key pair. Further, the second target cryptocurrency address may be a fingerprint or a hash of a second target cryptocurrency public key of the second target cryptocurrency key pair. Moreover, the third target cryptocurrency address may be a fingerprint or a hash of a third target cryptocurrency public key of the third target cryptocurrency key pair. Furthermore, the fourth target cryptocurrency address may be a fingerprint or a hash of a fourth target cryptocurrency public key of the fourth target cryptocurrency key pair.

In general, each cryptocurrency address may be different from each cryptocurrency public key. Further, each cryptocurrency address maybe not derivable from the corresponding cryptocurrency public key. Each cryptocurrency address may be unique.

It may be provided that for each target cryptocurrency public key, no transaction using the target cryptocurrency public key within a cryptocurrency protocol has been carried out. I.e., it may be provided that no corresponding target cryptocurrency asset has been redeemed.

One of the first cryptocurrency protocol and the second cryptocurrency protocol, preferably each of the first cryptocurrency protocol and the second cryptocurrency protocol, may be a cryptocurrency protocol employing pay-to-public-key-hashes, preferably one of the Bitcoin protocol, the Litecoin protocol, the Dogecoin protocol, and a Bitcoin-based protocol (including Bitcoin hard forks).

The at least one first cryptocurrency asset and/or the at least one second cryptocurrency asset may be one of an amount of Bitcoins, an amount of Litecoins, and an amount of Dogecoins.

The first cryptocurrency protocol and the second cryptocurrency protocol may be the same. Alternatively, the first cryptocurrency protocol and the second cryptocurrency protocol may be different.

One of the first quantum key distribution protocol and the second quantum key distribution protocol, preferably each of the first quantum key distribution protocol and the second quantum key distribution protocol, may be one of BB84, B92, and E91.

By employing the first quantum key distribution protocol and/or the second quantum key distribution protocol, a secret bit sequence shared between the server and the first user device and/or between the server and the second user device can be established. Using the secret bit sequence, a message between the server and the first user device (alternatively between the server and the second user device) may be encrypted, preferably via a one-time pad protocol. For example, each message bit of the message may be encrypted and/or decrypted via applying an XOR operation on the message bit with a bit of the secret bit sequence.

The first user data may comprise at least one of a first vault address indicative of the first user, a first hash of the first password, and the first balance. The first user data may also comprise a hash of the first vault address.

Additionally or alternatively, the second user data may comprise a second vault address indicative of the second user, a second hash of the second password, and the second balance. The second user data may also comprise a hash of the second vault address.

The first vault address and the second vault address may each be unique. The first vault address may be associated with the first password and/or the second vault address may be associated with the second password. It may be provided that the first vault address is determined from the first password or vice versa. It may be provided that the second vault address is determined from the second password or vice versa.

The first balance may be assigned to the first vault address and/or the second balance may be assigned to the second vault address. For example, providing the first user data with the first vault asset may comprise increasing the first balance assigned to the first vault address. Removing the second vault asset from the first user data may comprise decreasing the first balance assigned to the first vault address. Providing the second user data with the second vault asset may comprise increasing the second balance assigned the second vault address.

The method may comprise transmitting first transaction information, indicative of a cryptocurrency transaction, from the first user device to the server, preferably before generating the at least one first target cryptocurrency key pair and the at least one first target cryptocurrency address. The method may further comprise transmitting second transaction information, indicative of an (internal) server transaction, from the first user device to the server via the first communication channel employing the first quantum key distribution protocol, in particular together with transmitting the first password from the first user device to the server via the first communication channel.

It may be provided that the generation of the at least one first target cryptocurrency key pair and the at least one first target cryptocurrency address is based on the first transaction information. It may be provided that the transmission of the at least one second target cryptocurrency key pair or the provision of the second user data with the second vault asset is based on the second transaction information.

The method may further comprise transmitting third transaction information, indicative of an (internal) server transaction, from the second user device to the server via the second communication channel employing the second quantum key distribution protocol, in particular together with transmitting the second password from the second user device to the server via the second communication channel. The third transaction information may comprise the second vault address and the third value corresponding to the at least one third cryptocurrency asset.

It may be provided that the generation of the at least one fourth target cryptocurrency key pair and the at least one fourth target cryptocurrency address is based on fourth transaction information (transmitted from the first user device to the server).

The first transaction information may comprise the first vault address and the first value corresponding to the at least one first cryptocurrency asset. Additionally or alternatively, the second transaction information may comprise the first vault address, the second vault address, and the second value corresponding to the at least one second cryptocurrency asset.

The second transaction information may comprise information indicative of a withdrawal transaction or a vault transaction / internal server transaction.

The method may comprise determining, by the server, the at least one second target cryptocurrency key pair, based on the second transaction information, preferably based on the second value, more preferably before transmitting the at least one second target cryptocurrency key pair from the server to the first user device.

The method may comprise in reaction to the determining that a cryptocurrency asset has been transferred, providing the first vault address in the server and, preferably, transmitting the first vault address from the server to the first user device. The first vault address or a first vault address hash may be stored in the server. Verifying the first password by the server may further comprise comparing the first vault address (or its hash) from the first transaction information with a stored first vault address (or its stored hash) having been stored on the server.

The first user data and the second user data may each comprise a further balance corresponding to cryptocurrency assets of a further cryptocurrency, in particular of the second cryptocurrency.

Each further balance may represent an amount of further tokens that corresponds to cryptocurrency assets according to a rate with respect to the further cryptocurrency, preferably the second cryptocurrency. For example, while 10 tokens may correspond to a fixed amount of Bitcoins, ten further tokens may correspond to a different fixed amount of Litecoins.

The first transaction information and the second transaction information may be stored in a ledger. Further, the third transaction information may be stored in the ledger. The ledger may be stored on the server (in the server memory). The first user data and/or the second user data may be stored on the server (in the server memory). The first user data and the second user data may be stored in a database stored on the server. The first target cryptocurrency key pair, the second target cryptocurrency key pair, and the third target cryptocurrency key pair may be stored in a register stored on the server. In an embodiment, the database and the ledger may be stored in a blockchain. The blockchain may be stored on the server.

The first target cryptocurrency key pair and the second target cryptocurrency key pair may be different or the same. The first target cryptocurrency address, the second target cryptocurrency address may be different or the same. The initial cryptocurrency address may be different from the first and the second target cryptocurrency address. The first password and the second password may be different. The at least one first cryptocurrency asset and at least one the second cryptocurrency asset may be the same or different. The first user device and the second user device may be different. The first communication channel and the second communication channel may be different.

The embodiments described above in connection with the method for performing cryptocurrency asset transactions may be provided correspondingly for the system for performing cryptocurrency asset transactions. Embodiments as described herein regarding a first entity such as a first user device or a first cryptocurrency asset can analogously be provided for a corresponding second entity and/or third entity and/or fourth entity. As understood herein, storing on a data processing device may comprise storing in a memory of the data processing device.

### Description of further embodiments

In the following, embodiments, by way of example, are described with reference to figures.
- Fig. 1: shows a graphical representation of a system comprising a plurality of data processing devices.
- Fig. 2: shows a graphical representation of a method for performing cryptocurrency asset transactions.
- Fig. 3: shows another graphical representation of the method for performing cryptocurrency asset transactions.

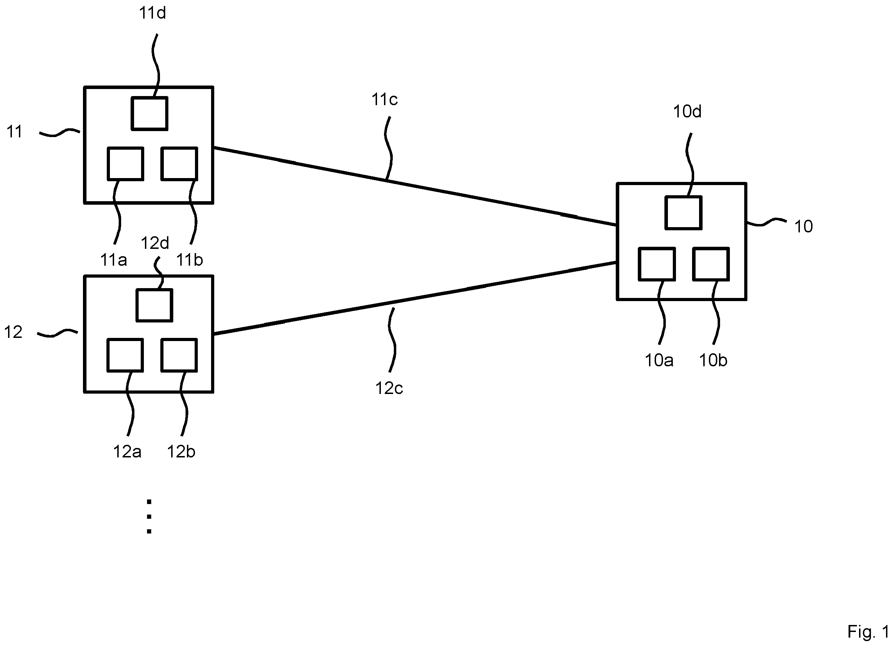

Fig. 1 shows a graphical representation of a system comprising a plurality of data processing devices 10, 11, 12, namely a server 10 and a plurality of user devices 11, 12. For simplicity, only two user devices 11, 12 are shown in Fig. 1. The server 10 comprises a server memory 10a and a server processor 10b. The user devices 11, 12 respectively comprise user device memories 11a, 12a and user device processors 11b, 12b.

The server 10 and the user devices 11, 12 are configured to exchange classical signals and/or quantum signals via communication channels 11c, 12c between the server 10 and the respective user devices 11, 12. To this end, the server 10 and the user devices 11, 12 may respectively comprise a server quantum transceiver 10d, a first user device quantum transceiver 11d, and a second user device quantum transceiver 12d, each configured to transmit and receive signals comprising quantum information. Optionally, further communication channels between different user devices 11, 12 may be provided (not shown). In such an embodiment, a QKD-based network, in which any pair of users can use a QKD protocol to establish a shared secret bit sequence may be provided.

The communication channels 11c, 12c may each comprise a quantum channel configured to convey the quantum signals. For example, each of the communication channels 11c, 12c may comprise an optical fiber. Alternatively, wireless communication channels 11c, 12c may be provided. The communication channels 11c, 12c may also each comprise a classical channel for transmitting the classical signals. Each optical fiber may be shared by the respective quantum channel and classical channel. Alternatively, the respective quantum channel and classical channel can be separate.

Information can securely be transferred between the server 10 and each of the user devices 11, 12 via the respective communication channels 11c, 12c using a QKD protocol. In particular, shared secret keys can be established. Different QKD protocols can be employed, most famously for example BB84, B92, or E91.

Each of the server 10 and the user devices 11, 12 are not restricted to a single computing device, but may each also comprise a plurality of sub-devices. Each user device 11, 12 may in particular comprise a personal computer, a mobile phone, and/or an ATM, each of which may be connected to the corresponding user device quantum transceiver 11d, 12d.

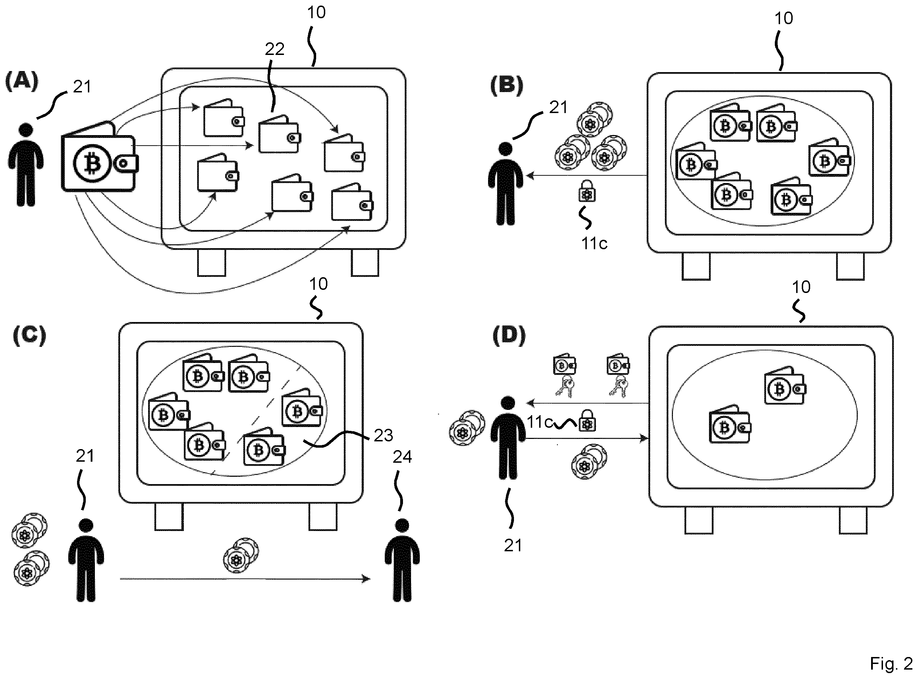

Fig. 2 shows a graphical representation of a method for performing cryptocurrency asset transactions.

A first user 21 (with a first user device 11) may secure funds (cryptocurrency assets such as an amount of bitcoins) associated with their initial cryptocurrency address as follows. In a first step, the server (vault) 10 generates a first target cryptocurrency key pair together with a first target cryptocurrency address 22 or a plurality of target cryptocurrency key pairs together with a plurality of target cryptocurrency addresses 22 (e.g., bitcoin addresses), to which the cryptocurrency assets of the first user 21 have to be transferred. Such a transfer represents a regular transfer within the employed cryptocurrency protocol. For example, a certain amount of bitcoins associated with an initial bitcoin address of the first user 21 is to be transferred to a first target bitcoin address 22 generated by the server 10.

Generating a plurality of target cryptocurrency addresses allows for facilitating convenient and quantum-safe withdrawal, as will be described below. In case of generating a plurality of target cryptocurrency addresses, the transfer has to be carried out in a distributed manner (see Fig. 2A). To this end, the funds associated with the initial cryptocurrency address are split into a plurality of (partial) cryptocurrency assets in such a way that the cryptocurrency amounts associated with the respective (partial) cryptocurrency assets in total correspond to the cryptocurrency amount of the funds. Subsequently, each (partial) cryptocurrency asset is transferred to one of the plurality of target cryptocurrency addresses 22. For example, if the initial bitcoin address is associated with 2.0 millibitcoins (2 mBTC), three target bitcoin addresses may be created and 1.0 mBTC may be transferred to one target bitcoin address, 0.5 mBTC to another target bitcoin address 23, and 0.5 mBTC to yet another target bitcoin address.

Subsequently, the first user 21 is provided with the right to access their deposit at their request (see Fig. 2B). To this end, a first password is provided in the first user device 11 and stored in a first user device memory 11a. The first password may be transferred from the server 10 to the first user device 11 via a first communication channel 11c employing a QKD protocol. Alternatively, the first password may be generated in the first user device 11 and transferred to the server 10. The first password may be stored in the server memory 10a. Alternatively, only a hash of the first password is stored in the server memory 10a.

For authenticating the first user 21, the first password is transmitted from the first user device 11 to the server 10 via the first communication channel 11c employing the QKD protocol. Subsequently, the first password is compared with the stored password in the server memory 10a. Alternatively, a hash of the transmitted first password is determined and compared with the stored hash in the server memory 10a.

This enables the first user 21 to withdraw cryptocurrency assets from the server 10 (see Fig. 2D) or to quantum-securely transfer the right to withdraw cryptocurrency assets to a second user 24 (see Fig. 2C). The withdrawal of a cryptocurrency asset from the server 10 means that the first user 21 (or the second user 24) obtains the target cryptocurrency key pair of the target cryptocurrency address (plus the target cryptocurrency addresses themselves) associated with the cryptocurrency asset. The target cryptocurrency key pair corresponds to the total value corresponding to the cryptocurrency asset (see Fig. 2D).

In order to quantum-securely transfer the right to withdraw cryptocurrency assets to the second user 24 (corresponding to an internal server transaction without performing a classical transaction according to a cryptocurrency protocol), the first user may for example transmit transaction information which comprises a certain requested vault value to the second user 24 to the server 10 via the first communication channel 11c employing QKD. The server may then modify the assignment of corresponding vault assets of the first user 21 and the second user 24.

Subsequently, the second user 24 may withdraw the thus reassigned vault assets by requesting receiving the according target cryptocurrency key pairs (corresponding to second or third target cryptocurrency addresses 23) from the server 10. In case of a quantum channel between the first user 21 and the second user 24, the first user 21 may also transmit access information to the number of cryptocurrency assets to the second user 24 via QKD.

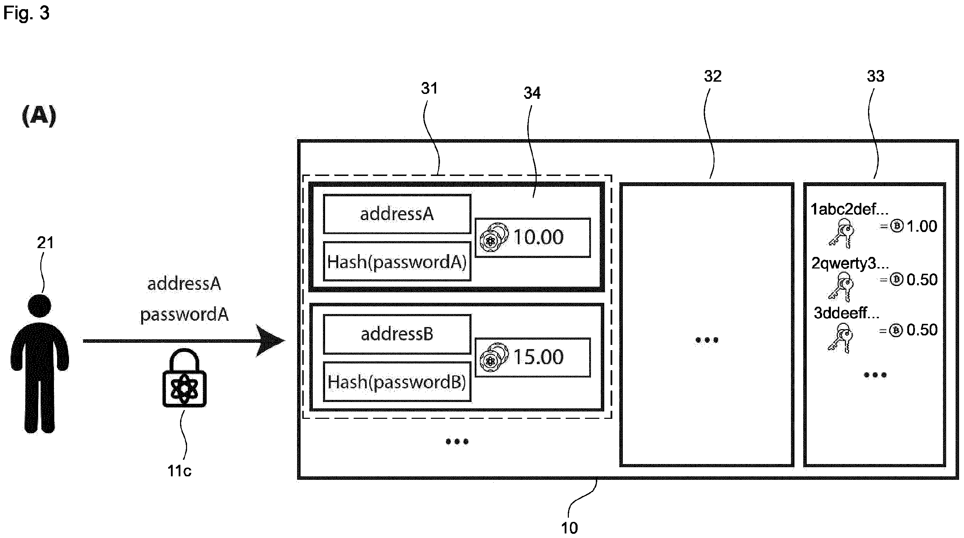

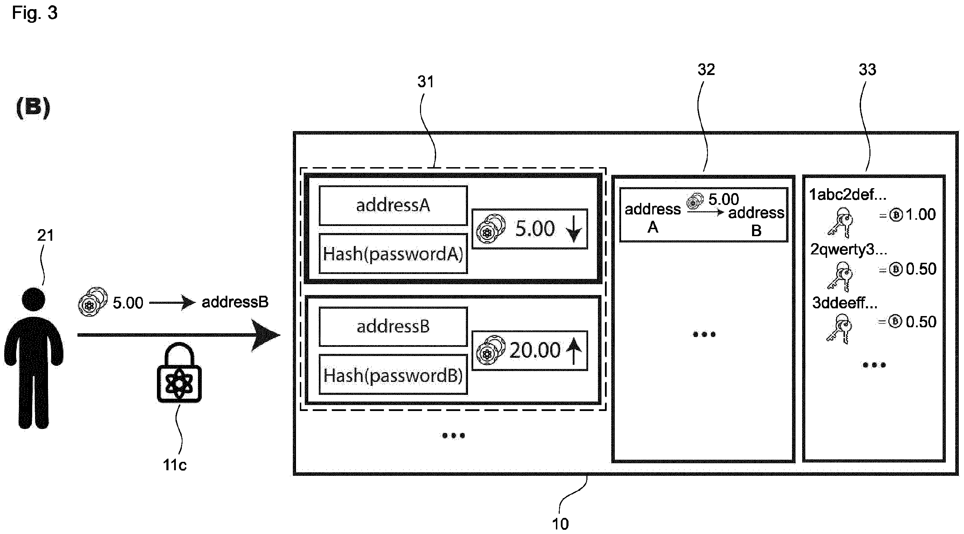

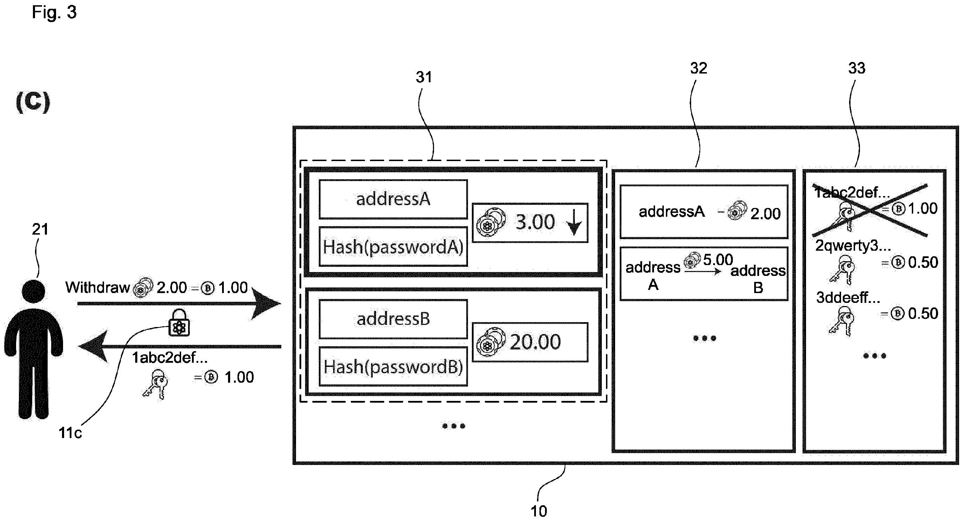

Figure 3 shows another graphical representation of the method for securing cryptocurrency assets.

User information and user transactions can be stored on the server 10 in a (quantum blockchain superstructure / QBS) database 31 and a (QBS) ledger 32, respectively. For each user, the database 31 includes a unique internal vault address, a hash of the user password, and an amount of tokens (token balance). The ledger 32 records the internal (token) transactions. A register 33 stored on the server 10 contains the (target) cryptocurrency addresses (and their target cryptocurrency key pairs) constituting the deposits of the users 21, 24.

In the shown embodiment, a single type of cryptocurrency is stored in the register 33 with the token value directly aligned to the corresponding token-cryptocurrency rate. The token balance of one of the users 21, 24 is therefore a number directly representing the amount of cryptocurrency funds deposited by the user 21, 24. Additionally, several types of cryptocurrencies may be supported. In this case, each cryptocurrency may be associated with a different type of token, which may be exchanged internally (within the vault 10) at a corresponding rate. Alternatively, a single type of tokens is associated to different types of cryptocurrencies via different exchange rates.

When the first user 21 accesses the server 10 for the first time, the server 10 generates a new unique vault address *(addressA)* and creates a corresponding QBS-database unit 34 (for example corresponding to first user data or to second user data). The vault address is then transmitted to the first user over the quantum-secure first communication channel 11c. The first password *(passwordA)* of the first user 21 can be either also generated by the server 10 and transmitted to the first user 21, or vice versa. For additional safety, the password assigned to the users 21, 24 are not directly stored on the server 10; only their hashes are stored. As a hash function, e.g. SHA-256 can be employed. Using the vault address and the first password, the first user 21 can access the vault to make deposits, check the token balance, make internal server transactions or withdraw cryptocurrency assets.

To make a deposit, the first user 21 makes a request to the server 10 (transmits first transaction information), by which the first user 21 specifies the amount of funds to be deposited. Subsequently, the server 10 generates new (target) cryptocurrency addresses (which, together with their (target) cryptocurrency key pairs, are stored on the server 10 in the register 33) and transmits the target cryptocurrency addresses (not the target cryptocurrency key pairs) to the first user device 11 with instructions on how to distribute the cryptocurrency assets among the target cryptocurrency addresses. After the cryptocurrency assets are successfully transferred, the token balance of the first user 21 changes correspondingly. The change in the token balance is also recorded in the ledger 32.

To conduct an internal server transaction, the first user 21 must access the server 10 over the quantum-secure first communication channel 11c with their credentials including the first password (see Fig. 3A) and transmit second transaction information including the vault address of the recipient second user 24 and the amount of tokens to be transferred (see Fig. 3B). This transaction is recorded in the ledger 32 and the respective token balances of the two users 21, 24 in the database 31 are changed accordingly. In the shown example, 5.00 tokens are transferred from the first user 21 to the second user 24.

In order for the first user 21 to withdraw cryptocurrency assets, the first user 21 must access the server 10 over the quantum-secure first communication channel 11c with their credentials and make a request by transmitting corresponding transaction information (see Fig. 3C). The server 10 then searches for the cryptocurrency addresses in its register 33 comprising in total the requested value. These cryptocurrency addresses together with their private/public cryptocurrency key pairs are transmitted to the first user 21 over the quantum-secure second communication channel 11c and deleted from the register 33. The token balance of the first user 21 is changed accordingly, and this change is recorded in the ledger 32. In the shown example, 2.00 tokens are withdrawn and a cryptocurrency key pair of a cryptocurrency asset with a value of 1.00 BTC is transmitted to the first user device 11. The second user 24 may withdraw cryptocurrency assets (in the shown example in Fig. 3C corresponding up to 20.00 tokens) analogously.

The features disclosed in this specification, the figures and/or the claims may be material for the realization of various embodiments, taken in isolation or in various combinations thereof.

## Claims

1. A method for performing cryptocurrency asset transactions, the method, in a system comprising a plurality of data processing devices (10, 11), comprising:
- generating, by a server (10), at least one first target cryptocurrency key pair and at least one corresponding first target cryptocurrency address (22) of a first cryptocurrency and storing the at least one first target cryptocurrency key pair and the at least one first target cryptocurrency address (22) on the server (10);
- transferring at least one first cryptocurrency asset from at least one initial cryptocurrency address to the at least one first target cryptocurrency address (22) employing a first cryptocurrency protocol;
- in reaction to determining that a cryptocurrency asset has been transferred:
- providing a first password in a first user device (11) and
- providing, by the server (10), first user data assigned to a first user (21) with a first vault asset corresponding to the at least one first cryptocurrency asset;
- transmitting the first password from the first user device (11) to the server (10) via a first communication channel (11c) employing a first quantum key distribution protocol and verifying the first password by the server (10); and
- in reaction to the first password having been verified:
- removing, by the server (10), a second vault asset from the first user data; and
- transmitting at least one second target cryptocurrency key pair and at least one corresponding second target cryptocurrency address of at least one second cryptocurrency asset corresponding to the second vault asset from the server (10) to the first user device (11) via the first communication channel (11c) employing the first quantum key distribution protocol or providing, by the server (10), second user data assigned to a second user (24) with the second vault asset.

2. The method according to claim 1, wherein providing the first user data with the first vault asset comprises increasing a first balance assigned to the first user (21) by a first value corresponding to the at least one first cryptocurrency asset;

3. The method according to claim 1 or 2, wherein
- removing the second vault asset from the first user data comprises decreasing the first balance by a second value corresponding to the at least one second cryptocurrency asset; and
- providing the second user data with the second vault asset comprises increasing a second balance assigned to a second user (24) by the second value.

4. The method according to claim 3, wherein the first balance and the second balance each represent an amount of tokens that corresponds to cryptocurrency assets according to a rate with respect to the first cryptocurrency.

5. The method according to any of the preceding claims, further comprising:
- providing a second password in a second user device (12);
- transmitting the second password from the second user device (12) to the server (10) via a second communication channel (12c) employing a second quantum key distribution protocol and verifying the second password by the server (10); and
- in reaction to the second password having been verified:
- removing, by the server (10), a third vault asset from the second user data, preferably comprising decreasing the second balance assigned to the second user (24) by a third value corresponding to the at least one third cryptocurrency asset, and
- transmitting at least one third target cryptocurrency key pair and at least one corresponding third target cryptocurrency address of at least one third cryptocurrency asset corresponding to the third vault asset from the server (10) to the second user device (12) via the second communication channel (12c) employing the second quantum key distribution protocol.

6. The method according to any of the preceding claims, wherein providing the first password in the first user device (11) comprises:
- generating the first password by the server (10) and transmitting the first password from the server (10) to the first user device (11) via the first communication channel (11c) employing the first quantum key distribution protocol; or
- generating the first password by the first user device (11) and transmitting the first password from the first user device (11) to the server (10) via the first communication channel (11c) employing the first quantum key distribution protocol.

7. The method according to any of the preceding claims, further comprising:
- generating, by the server (10), at least one fourth first target cryptocurrency key pair and at least one corresponding fourth target cryptocurrency address of a second cryptocurrency and storing the at least one fourth target cryptocurrency key pair and the at least one fourth target cryptocurrency address on the server (10);
- transferring at least one fourth cryptocurrency asset from at least one second initial cryptocurrency address to the fourth target cryptocurrency address employing a second cryptocurrency protocol; and
- modifying, by the server (10), the first user data with a fourth vault asset corresponding to the at least one fourth cryptocurrency asset.

8. The method according to any of the preceding claims, wherein the first cryptocurrency protocol is a blockchain-based protocol in which each cryptocurrency address is a fingerprint, preferably a hash of a cryptocurrency public key of a cryptocurrency key pair.

9. The method according to any of the preceding claims, wherein the first cryptocurrency protocol is a cryptocurrency protocol employing pay-to-public-key-hashes, preferably one of the Bitcoin protocol, the Litecoin protocol, the Dogecoin protocol, and a Bitcoin-based protocol.

10. The method according to any of the preceding claims, wherein the first quantum key distribution protocol is one of BB84, B92, and E91.

11. The method according to any of the preceding claims, wherein
- the first user data comprises a first vault address indicative of the first user (21), a first hash of the first password, and the first balance; and
- the second user data comprises a second vault address indicative of the second user (24), a second hash of the second password, and the second balance.

12. The method according to any of the preceding claims, further comprising:
- transmitting first transaction information, indicative of a cryptocurrency transaction, from the first user device (11) to the server (10); and
- transmitting second transaction information, indicative of a server transaction, from the first user device (11) to the server (10) via the first communication channel employing the first quantum key distribution protocol.

13. The method according to claim 11 and 12, wherein the first transaction information comprises the first vault address and the first value corresponding to the at least one first cryptocurrency asset and wherein the second transaction information comprises the first vault address, and the second vault address, and the second value corresponding to the at least one second cryptocurrency asset.

14. The method according to any of the preceding claims, wherein the first user data and the second user data each comprise a further balance corresponding to cryptocurrency assets of a further cryptocurrency.

15. A system for performing cryptocurrency asset transactions, comprising a plurality of data processing devices (10, 11) and configured to perform:
- generating, by a server (10), at least one first target cryptocurrency key pair and at least one corresponding first target cryptocurrency address (22) of a first cryptocurrency, and storing the at least one first target cryptocurrency key pair and the at least one first target cryptocurrency address (22) on the server (10);
- transferring at least one first cryptocurrency asset from at least one initial cryptocurrency address to the at least one first target cryptocurrency address (22) employing a first cryptocurrency protocol;
- in reaction to determining that a cryptocurrency asset has been transferred:
- providing a first password in a first user device (11), and
- providing, by the server (10), first user data assigned to a first user (21) with a first vault asset corresponding to the at least one first cryptocurrency asset;
- transmitting the first password from the first user device (11) to the server (10) via a first communication channel (11c) employing a first quantum key distribution protocol and verifying the first password by the server (10); and
- in reaction to the first password having been verified:
- removing, by the server (10), a second vault asset from the first user data;
- transmitting at least one second target cryptocurrency key pair and at least one corresponding second target cryptocurrency address of at least one second cryptocurrency asset corresponding to the second vault asset from the server (10) to the first user device (11) via the first communication channel (11c) employing the first quantum key distribution protocol or providing, by the server (10), second user data assigned to a second user (24) with the second vault asset.

## Amended claims

### Amended claims in accordance with Rule 137(2) EPC.

1. A method for performing cryptocurrency asset transactions, the method, in a system comprising a plurality of data processing devices (10, 11), comprising:
- generating, by a server (10), at least one first target cryptocurrency key pair and at least one corresponding first target cryptocurrency address (22) of a first cryptocurrency and storing the at least one first target cryptocurrency key pair and the at least one first target cryptocurrency address (22) on the server (10);
- transferring at least one first cryptocurrency asset of a first user (21) from at least one initial cryptocurrency address to the at least one first target cryptocurrency address (22) employing a first cryptocurrency protocol;
- in reaction to determining that a cryptocurrency asset has been transferred:
- providing a first password in a first user device (11) of the first user (21) and
- providing, by the server (10), first user data assigned to the first user (21) with a first vault asset corresponding to the at least one first cryptocurrency asset;
- transmitting the first password from the first user device (11) to the server (10) via a first communication channel (11c) employing a first quantum key distribution protocol and verifying the first password by the server (10); and
- in reaction to the first password having been verified:
- removing, by the server (10), a second vault asset from the first user data; and
- transmitting at least one second target cryptocurrency key pair and at least one corresponding second target cryptocurrency address of at least one second cryptocurrency asset corresponding to the second vault asset from the server (10) to the first user device (11) via the first communication channel (11c) employing the first quantum key distribution protocol or providing, by the server (10), second user data assigned to a second user (24) with the second vault asset.

2. The method according to claim 1, wherein providing the first user data with the first vault asset comprises increasing a first balance assigned to the first user (21) by a first value corresponding to the at least one first cryptocurrency asset;

3. The method according to claim 1 or 2, wherein
- removing the second vault asset from the first user data comprises decreasing the first balance by a second value corresponding to the at least one second cryptocurrency asset; and
- providing the second user data with the second vault asset comprises increasing a second balance assigned to a second user (24) by the second value.

4. The method according to claim 3, wherein the first balance and the second balance each represent an amount of tokens that corresponds to cryptocurrency assets according to a rate with respect to the first cryptocurrency.

5. The method according to any of the preceding claims, further comprising:
- providing a second password in a second user device (12);
- transmitting the second password from the second user device (12) to the server (10) via a second communication channel (12c) employing a second quantum key distribution protocol and verifying the second password by the server (10); and
- in reaction to the second password having been verified:
- removing, by the server (10), a third vault asset from the second user data, preferably comprising decreasing the second balance assigned to the second user (24) by a third value corresponding to the at least one third cryptocurrency asset, and
- transmitting at least one third target cryptocurrency key pair and at least one corresponding third target cryptocurrency address of at least one third cryptocurrency asset corresponding to the third vault asset from the server (10) to the second user device (12) via the second communication channel (12c) employing the second quantum key distribution protocol.

6. The method according to any of the preceding claims, wherein providing the first password in the first user device (11) comprises:
- generating the first password by the server (10) and transmitting the first password from the server (10) to the first user device (11) via the first communication channel (11c) employing the first quantum key distribution protocol; or
- generating the first password by the first user device (11) and transmitting the first password from the first user device (11) to the server (10) via the first communication channel (11c) employing the first quantum key distribution protocol.

7. The method according to any of the preceding claims, further comprising:
- generating, by the server (10), at least one fourth first target cryptocurrency key pair and at least one corresponding fourth target cryptocurrency address of a second cryptocurrency and storing the at least one fourth target cryptocurrency key pair and the at least one fourth target cryptocurrency address on the server (10);
- transferring at least one fourth cryptocurrency asset from at least one second initial cryptocurrency address to the fourth target cryptocurrency address employing a second cryptocurrency protocol; and
- modifying, by the server (10), the first user data with a fourth vault asset corresponding to the at least one fourth cryptocurrency asset.

8. The method according to any of the preceding claims, wherein the first cryptocurrency protocol is a blockchain-based protocol in which each cryptocurrency address is a fingerprint, preferably a hash of a cryptocurrency public key of a cryptocurrency key pair.

9. The method according to any of the preceding claims, wherein the first cryptocurrency protocol is a cryptocurrency protocol employing pay-to-public-key-hashes, preferably one of the Bitcoin protocol, the Litecoin protocol, the Dogecoin protocol, and a Bitcoin-based protocol.

10. The method according to any of the preceding claims, wherein the first quantum key distribution protocol is one of BB84, B92, and E91.

11. The method according to any of the preceding claims, wherein
- the first user data comprises a first vault address indicative of the first user (21), a first hash of the first password, and the first balance; and
- the second user data comprises a second vault address indicative of the second user (24), a second hash of the second password, and the second balance.

12. The method according to any of the preceding claims, further comprising:
- transmitting first transaction information, indicative of a cryptocurrency transaction, from the first user device (11) to the server (10); and
- transmitting second transaction information, indicative of a server transaction, from the first user device (11) to the server (10) via the first communication channel employing the first quantum key distribution protocol.

13. The method according to claim 11 and 12, wherein the first transaction information comprises the first vault address and the first value corresponding to the at least one first cryptocurrency asset and wherein the second transaction information comprises the first vault address, and the second vault address, and the second value corresponding to the at least one second cryptocurrency asset.

14. The method according to any of the preceding claims, wherein the first user data and the second user data each comprise a further balance corresponding to cryptocurrency assets of a further cryptocurrency.

15. A system for performing cryptocurrency asset transactions, comprising a plurality of data processing devices (10, 11) and configured to perform:
- generating, by a server (10), at least one first target cryptocurrency key pair and at least one corresponding first target cryptocurrency address (22) of a first cryptocurrency, and storing the at least one first target cryptocurrency key pair and the at least one first target cryptocurrency address (22) on the server (10);
- transferring at least one first cryptocurrency asset of a first user (21) from at least one initial cryptocurrency address to the at least one first target cryptocurrency address (22) employing a first cryptocurrency protocol;
- in reaction to determining that a cryptocurrency asset has been transferred:
- providing a first password in a first user device (11) of the first user (21), and
- providing, by the server (10), first user data assigned to the first user (21) with a first vault asset corresponding to the at least one first cryptocurrency asset;
- transmitting the first password from the first user device (11) to the server (10) via a first communication channel (11c) employing a first quantum key distribution protocol and verifying the first password by the server (10); and
- in reaction to the first password having been verified:
- removing, by the server (10), a second vault asset from the first user data;
- transmitting at least one second target cryptocurrency key pair and at least one corresponding second target cryptocurrency address of at least one second cryptocurrency asset corresponding to the second vault asset from the server (10) to the first user device (11) via the first communication channel (11c) employing the first quantum key distribution protocol or providing, by the server (10), second user data assigned to a second user (24) with the second vault asset.
